# EUROPEAN PATENT SPECIFICATION

(11) **EP 4 291 905 B1**
(45) Date of publication and mention of the grant of the patent: **22.07.2026**
(21) Application number: 22753553.1
(22) Date of filing: 10.02.2022
(51) Int. Cl.: G01N 35/00, G01N 35/04, G01N 35/10, G06T 7/73, G06V 10/10

(54) **APPARATUS AND METHODS OF ALIGNING COMPONENTS OF DIAGNOSTIC LABORATORY SYSTEMS**
VORRICHTUNG UND VERFAHREN ZUR AUSRICHTUNG VON KOMPONENTEN VON DIAGNOSTISCHEN LABORSYSTEMEN
APPAREIL ET PROCÉDÉS D'ALIGNEMENT DE COMPOSANTS DE SYSTÈMES DE DIAGNOSTIC DE LABORATOIRE

(30) Priority: 11.02.2021 US 202163148541 P
(43) Date of publication of application: 20.12.2023
(60) Divisional application: 26185076.2
(73) Proprietor: Siemens Healthcare Diagnostics, Inc., Tarrytown, NY 10591 (US)
(72) Inventor: NALAM VENKAT, Rayal Raj Prasad, Princeton, New Jersey 08542 (US); CHANG, Yao-Jen, Princeton, New Jersey 08540 (US); POLLACK, Benjamin S., Jersey City, New Jersey 07302 (US); KAPOOR, Ankur, Plainsboro, New Jersey 08536 (US)
(74) Representative: Schweitzer, Klaus
(86) International application number: PCT/US2022/070609
(87) International publication number: WO 2022/174241

(56) References cited:
- US-A1- 2015 140 668
- US-A1- 2017 227 564
- US-A1- 2018 078 388
- US-A1- 2018 164 335
- US-A1- 2018 207 549

## Description

### CROSS REFERENCE TO RELATED APPLICATION

This application claims the benefit of U.S. Provisional Patent Application No. 63/148,541, entitled "APPARATUS AND METHODS OF ALIGNING COMPONENTS OF DIAGNOSTIC LABORATORY SYSTEMS" filed February 11, 2021.

### FIELD

Embodiments of the present disclosure relate to apparatus, systems, and methods concerning aligning of components within a diagnostic laboratory system.

### BACKGROUND

Diagnostic laboratory systems conduct immunoassays or clinical chemistry analyses to identify an analyte or other constituent in a biological specimen such as blood serum, blood plasma, urine, interstitial liquid, cerebrospinal liquids, and the like. Reactions during the assays or clinical chemistry analyses generate various changes that may be read and/or interpreted to determine a concentration of an analyte or other constituent contained in a specimen, that may, in some embodiments, be suggestive of a patient's disease state.

Improvements in automated specimen testing have been accompanied by corresponding advances in pre-analytical sample preparation and handling operations. The sample preparations include centrifugation of specimen containers to separate sample constituents, cap removal (de-capping) to facilitate specimen access, aliquot preparation, and a quality check to determine a condition (e.g., hemolytic, icteric, lipemic, or normal (HILN) of the specimen. Various mechanisms may automatically transport specimens contained in specimen containers on moveable carriers to one or more pre-analytical sample processing stations positioned on or along a track, so that various preprocessing or prescreening operations can be performed thereon.

One or more robots located along the track may be configured to remove the specimen containers from the carriers and/or move pipettes to the locations of the specimen containers on the track. The robots or other devices may initiate aspiration of a portion of the biological specimen from the specimen containers. The robots may also dispense liquids into cuvettes and other containers.

US 2018/164335 A1 discloses a method of aligning a component to a structure during operation of a diagnostic laboratory system.

### SUMMARY

According to a first aspect, a method of aligning a component to a structure during assembly and operation of a diagnostic laboratory system according to claim 1 is provided. The method includes aligning a position sensor to the structure; sensing a position of the component using the position sensor; calculating a position of the component relative to the position sensor based at least in part on the sensing; and aligning the component to the position sensor based at least partially on the sensing,
wherein the position sensor is a touch sensor and wherein sensing a position of the component comprises touching the component to the touch sensor, or
wherein the position sensor is a touch sensor and wherein the component is movable by a root, and wherein sensing the position of the component comprises moving the robot to where the component touches the touch sensor.

According to another aspect, a method of aligning a component to a structure during assembly and operation of a diagnostic laboratory system according to claim 8 is provided. The method includes aligning a position sensor to the structure;
sensing a position of the component using the position sensor; calculating a position of the component relative to the position sensor based at least in part on the sensing; and aligning the component to the position sensor based at least partially on the sensing,
further comprising providing a fiducial marker affixed to the structure; wherein:
   the position sensor is an imaging device; and aligning the position sensor comprises capturing an image of the fiducial marker using the imaging device and determining the position of the imaging device based at least in part on a location of the fiducial marker in the captured image.

In another aspect, a diagnostic laboratory system according to claim 10 is provided. The diagnostic analyzer system includes a transport system; an imaging device aligned to the transport system, the imaging device configured to generate image data representative of a component; and a computer configured to:
identify the component in the image data; determine the alignment of the component relative to the imaging device; and
provide an indication of a misalignment of the component relative to the transport system based on the alignment of the component relative to the imaging device

Still other aspects, features, and advantages of the present disclosure may be readily apparent from the following description by illustrating a number of example embodiments and implementations, including the best mode contemplated for carrying out the present disclosure. The present disclosure may also be capable of other and different embodiments, and its several details may be modified in various respects, all without departing from the scope of the present disclosure. Accordingly, the drawings and descriptions are to be regarded as illustrative in nature, and not as restrictive. The disclosure is to cover all modifications and alternatives falling within the scope of the claims.

### BRIEF DESCRIPTION OF THE DRAWINGS

The drawings, described below, are for illustrative purposes only and are not necessarily drawn to scale. The drawings are not intended to limit the scope of the disclosure in any way. Like numerals are used throughout the drawings to denote like elements.
FIG. 1 illustrates a top plan view of a diagnostic laboratory system including a track and one or more alignment systems according to one or more embodiments of the disclosure.
FIG. 2A illustrates a top plan view of an alignment system aligning a component to a track of a diagnostic laboratory system according to one or more embodiments of the disclosure.
FIG. 2B illustrates a side elevation view of the alignment system of FIG. 2A according to one or more embodiments of the disclosure.
FIG. 2C illustrates a front elevation view of the component of FIGS. 2A-2B according to one or more embodiments of the disclosure.
FIG. 3A illustrates a captured image of the component of FIG. 2C showing the component misaligned according to one or more embodiments.
FIG. 3B illustrates edges of the image of the component shown in FIG. 3A identified by analyzing the image of component according to one or more embodiments.
FIG. 3C illustrates another captured image of the component of FIG. 2C showing the component misaligned according to one or more embodiments.
FIG. 3D illustrates edges of the image of the component shown in FIG. 3C identified by analyzing the image of component according to one or more embodiments.
FIG. 3E illustrates another captured image of the component of FIG. 2C showing the component misaligned according to one or more embodiments.
FIG. 3F illustrates edges of the image of the component shown in FIG. 3E identified by analyzing the image of component according to one or more embodiments.
FIG. 4A illustrates a top view of an alignment system aligning a component and an imaging device relative to a track according to one or more embodiments of the disclosure.
FIG. 4B illustrates a side view of the alignment system of FIG. 4A according to one or more embodiments of the disclosure.
FIG. 4C illustrates a front elevation view of a fiducial marker configured to be imaged by an imaging device of an alignment system according to one or more embodiments of the disclosure.
FIG. 5A illustrates an image including the fiducial marker in FIGS 4A-4C captured by an imaging device according to one or more embodiments of the disclosure.
FIG. 5B illustrates an enlarged portion of the image of FIG. 5A showing an enlarged view of the fiducial marker according to one or more embodiments of the disclosure.
FIG. 6 illustrates a top view of a partially cross-sectioned quality check module in a diagnostic laboratory system according to one or more embodiments.
FIG. 7A illustrates a top plan view of a partially cross-sectioned quality check module in a diagnostic laboratory system showing an alignment tool located on a track of the quality check module according to one or more embodiments.
FIG. 7B illustrates a side elevation view of the alignment tool of FIG. 7A according to one or more embodiments.
FIG. 8 illustrates a top plan view of an alignment system configured to align a robot of a diagnostic laboratory system to a track according to one or more embodiments.
FIG. 9A illustrates a top plan view of a diagnostic laboratory system including a plurality of alignment systems according to one or more embodiments.
FIG. 9B illustrates an enlarged view of an alignment system of the diagnostic laboratory system of FIG. 9A according to one or more embodiments.
FIG. 10 illustrates an alignment system implemented in an aspiration and dispense module of a diagnostic laboratory system according to one or more embodiments.
FIG. 11 illustrates an alignment system including a touch sensor implemented in an aspiration and dispense module of a diagnostic laboratory system according to one or more embodiments.
FIG. 12 is a flowchart describing a method of aligning a component to a structure in a diagnostic laboratory system according to one or more embodiments.
FIG. 13 is a flowchart describing a method of aligning a component to a track in a diagnostic laboratory system according to one or more embodiments.

### DETAILED DESCRIPTION

Diagnostic laboratory systems (e.g., biological specimen testing systems) may include a plurality of components, such as preprocessing (including prescreening) modules and analyzers that utilize a transport system to move specimens between the components. The transport system may include a track that transports the specimens and/or specimen containers. Diagnostic laboratory systems may also include one or more instruments that may each include one or more preprocessing modules and/or analyzers. Because of the size and weight of these modules, the diagnostic laboratory systems are typically dis-assembled prior to shipping to a customer site. The diagnostic laboratory systems are subsequently reassembled at the customer site.

If the robots and other components are not precisely aligned during assembly and during operation of the diagnostic laboratory systems, the robots and other components may collide with specimen containers and other objects, which may damage components and cause disruptions in the operation of the diagnostic laboratory systems.

Some immunoassays and clinical chemistry analyses conducted by the analyzers may be performed using photometric analysis, which may include various illumination sources, lenses, and/or imaging devices. If the components of the photometric analysis are not properly aligned during assembly as well as during operation of the diagnostic laboratory systems, the photometric analysis may generate erroneous results.

Based on the foregoing, apparatus, systems, and methods of aligning components during assembly and operation of diagnostic laboratory systems are sought.

The diagnostic laboratory systems include at least one tube transport system. The tube transport system may include a track configured to transport specimens in specimen containers (e.g., tubes) to different components, including modules and instruments, of the diagnostic laboratory systems. Assembly of a diagnostic laboratory system includes properly aligning the various components to the track. Even a minor misalignment could cause issues such as failed aspirations, damage to components, fluid spills, and erroneous tests.

Due to the complexity of these components and the track, assembly faults may arise due to factors such as human error or parts being deformed (e.g., bent) during transit and/or assembly. While major faults may be easily identified (ex: parts not fitting together or not properly secured together), many of the assembly faults relate to minor misalignments that are not visible to the human eye. These alignment faults, however, may accumulate and lead to certain issues concerning the performance of the diagnostic laboratory system. For example, in a quality check module of the diagnostic laboratory system, a housing or shroud not properly aligned to the track could lead to the specimen containers colliding with the housing.

External disturbances, collisions, vibration, and other factors related to a diagnostic laboratory system over time may also cause misalignment of components thereof. As such, an inspection of one or more of the components may be warranted on a regular basis, or continuously, rather than solely after assembly of the diagnostic analyzer system. Thus, according to embodiments of the disclosure, operational methods involving inspection are provided that operate to identify misalignment of one or more components with respect to the track or other structure of the diagnostic analyzer system.

Apparatus and methods of aligning a component to a structure, such as a track or transport system, in diagnostic laboratory systems are disclosed herein. In some embodiments, a position sensor is aligned with the track and then the position sensor is aligned with the component. Examples of the position sensor include imaging devices and touch sensors. When the position sensor is aligned with the track, the position sensor is in a known location or position with respect to the track and may share a coordinate system with the track, for example. The position sensor may then be used to determine the alignment of the component relative to the position sensor. Because the position sensor is aligned with the track, the alignment of the component with the track can be readily calculated.

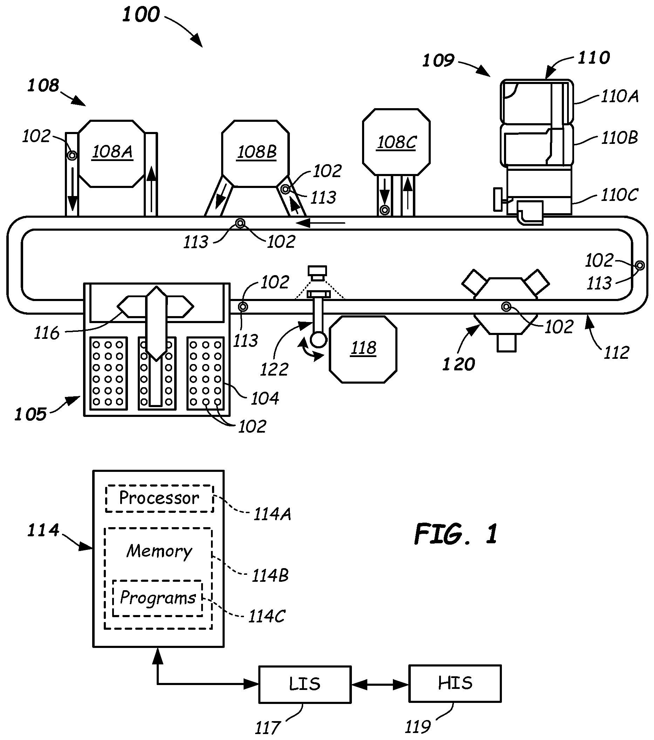

Further details of inventive alignment methods, alignment apparatus, and diagnostic laboratory systems including one or more alignment apparatus will be described with reference to FIGS. 1-13 herein.

Reference is made to FIG. 1, which illustrates an example embodiment of a diagnostic laboratory system 100 configured to preprocess and/or analyze biological specimens stored in specimen containers 102. The specimen containers 102 may be contained in one or more racks 104 provided at a loading area 105. The processing may include preprocessing or prescreening of the specimens and/or the specimen containers 102 prior to analysis by one or more analyzer modules 108. The diagnostic laboratory system 100 may also include one or more instruments 109, wherein each instrument 109 may include one or more preprocessing modules and/or one or more analyzer modules.

In the embodiment of FIG. 1, the diagnostic laboratory system 100 may include a single instrument 109. The embodiment of the instrument 109 depicted in FIG. 1 includes three modules 110 that are referred to individually as a first module 110A, a second module 110B, and a third module 110C. In some embodiments, the third module 110C may be a preprocessing module, for example, that processes the specimen containers 102 and/or specimens located therein. The first module 110A and the second module 110B may be analyzer modules that analyze specimens as described herein. Other embodiments of instruments may be included in the diagnostic laboratory system 100.

The embodiment of FIG. 1 includes three modules 108, which are referred to individually as a first module 108A, a second module 108B, and a third module 108C. Preprocessing may include processing by one of the modules 108, which may be a decapper and/or a centrifuge, for example. In some embodiments, one or more of the modules 108 may be one or more clinical chemistry analyzers and/or one or more assaying instruments, or the like, or combinations thereof. More or fewer modules 108 and instruments 109 may be used in the diagnostic laboratory system 100.

The specimen containers 102 may be moved throughout the diagnostic laboratory system 100 by a track 112 on carriers 113. In some embodiments, the track 112 may move the carriers 113 between different modules 108, instruments 109, and other components of the diagnostic laboratory system 100. In other embodiments, the carriers 113 may be self-propelled and the track 112 may enable the carriers 113 to move the specimen containers 102 throughout the diagnostic laboratory system 100.

The track 112 may be a railed track (e.g., monorail track or multiple rail track), a collection of conveyor belts, chains, moveable platforms, or other suitable conveyance mechanisms. The track 112 may have a circular, serpentine, or other shape, and may be a closed (i.e., never ending) track in some embodiments. The track 112 may transport individual ones of the specimen containers 102 in the carriers 113. In other embodiments multiple ones of the specimen containers 102 may be transported in single carriers. The specimen containers 102 may be configured to be moved by the carriers 113 in an upright orientation. In the depicted embodiment, the carriers 113 may be configured to stop at specific locations along the track 112.

The diagnostic laboratory system 100 may include a computer 114 or be configured to communicate with the computer 114. The computer 114 may be a microprocessor-based central processing unit CPU, suitable memory, software, and conditioning electronics and drivers for operating the various components of the diagnostic laboratory system 100. The computer 114 may include a processor 114A and memory 114B, wherein the processor 114A is configured to execute programs 114C stored in the memory 114B. The computer 114 may be housed as part of, or separate from, the diagnostic laboratory system 100. The programs 114C may operate components of the diagnostic laboratory system 100 and may perform alignment procedures or may enable users to perform alignment procedures as described herein. Computer 114 may communicate with laboratory information system (LIS) 117 regarding test orders and results as is conventional. LIS 117 may receive such test orders from, and communicate results to, a hospital information system (HIS) 119.

In some embodiments, the diagnostic laboratory system 100 may include a robot 116 that, upon being appropriately calibrated and or aligned with the track 112, may be configured to pick up specific specimen containers 102 from the one or more racks 104 and place the specimen containers 102 into the carriers 113 located at predetermined locations on the track 112 or at an input lane of the track (not shown). The robot 116 may be operated via instructions generated by the computer 114, such as instructions generated by one or more of the programs 114C. Optionally, robot 116 may have its own computer or workstation that is in communication with computer 114.

The robot 116 may load the specimen containers 102 from the racks 104 onto the carriers and offload the specimen containers 102 from the carriers 113 after processing and/or testing. The robot 116 may be configured to grasp the specimen containers 102 from the one or more racks 104 with robot grippers (not shown in FIG. 1) and place the specimen containers 102 onto the carriers 113. The robot 116 may also be configured to remove specimen containers 102 from the carriers 113 upon completion of testing. The robot 116 may include one or more (e.g., at least two) robot arms or components capable of spatial motion to move the specimen containers 102 as described herein. If the robot 116 is not properly aligned with the track 112, the robot 116 or the specimen containers 102 may collide with a component of the diagnostic laboratory system 100. In some embodiments, the collision may damage the component (e.g., a carrier 113 or track 112 or other structural component), the robot 116, and/or the specimen containers 102. Alignment apparatus and methods are described herein.

The specimen containers 102 carried by carriers 113 may progress to a one or more preprocessing modules after being loaded onto the carriers 113. For example, the carriers 113 may move the specimen containers 102 to a preprocessing module 118, which may, for example, be a centrifuge station. The centrifuge station may perform fractionation of the specimen to separate the components of the specimen. The diagnostic laboratory system 100 may include a robot 122 configured to remove the specimen containers 102 from the track 112 and place the specimen containers 102 into the preprocessing module 118.

If the robot 122 is not properly aligned with the track 112, the specimen containers 102 may not be handled properly by the robot 122. In some embodiments, if the robot 122 is not properly aligned to the track 112 the specimen containers 102 and/or components (e.g., arms and/or grippers) of the robot 122 may collide with components (e.g., carriers 113, track 112, and/or other structures) of the diagnostic laboratory system 100 and may cause damage to the specimen containers 102, the robot 122, and/or the components. Other modules 108 and instruments 109 in the diagnostic laboratory system 100 may include robots that are similar or identical to the robot 122. Other methods of moving the specimen containers 102 and/or carriers 113 to the modules 108 and/or instruments 109 may be used, such as inflow and outflow lanes. Methods and apparatus are described herein that align the robot 122 and other robots with the track 112.

In some embodiments, the diagnostic laboratory system 100 may include a module such as a quality check module 120 that may be located adjacent the track 112. The quality check module 120 may be configured to capture one or more images of the specimen containers 102 and/or the specimens located therein, wherein the one or more images comprise image data. The computer 114 or other computer may analyze the image data to determine (prescreen) whether the specimen is in proper condition for analysis by the modules 108 and/or the instrument 109. The analysis (prescreen) may further determine the type of test or analysis in which the specimen container 102 is configured, i.e., whether the right type of specimen container 102 has been used for the test ordered.

As described above, the diagnostic laboratory system 100 may include many moving components. Many of these moving components move relative to the track 112 to access the specimen containers 102 and to move the specimen containers 102 relative to the track 112. If the moving components are not properly aligned with structures of the diagnostic laboratory system 100, such as the track 112, the components and/or the specimen containers 102 may be damaged during movement.

The diagnostic laboratory system 100 may also include one or more imaging devices at various locations that capture images of the specimen containers 102 and/or other components within the diagnostic laboratory system 100. These imaging devices and other components may need precise alignment with components or modules 108 of the diagnostic laboratory system 100 to operate correctly.

Methods and apparatus are disclosed herein that align a position sensor to a structure (e.g., track 112), such as in a transport system. The aligned position sensor may then be used to align another component(s) to the structure (e.g., to the track 112). For example, when the position sensor is aligned to the track 112, the track 112 and the position sensor may share the same coordinate system. The shared coordinate system may then be used to align the components to the track 112.

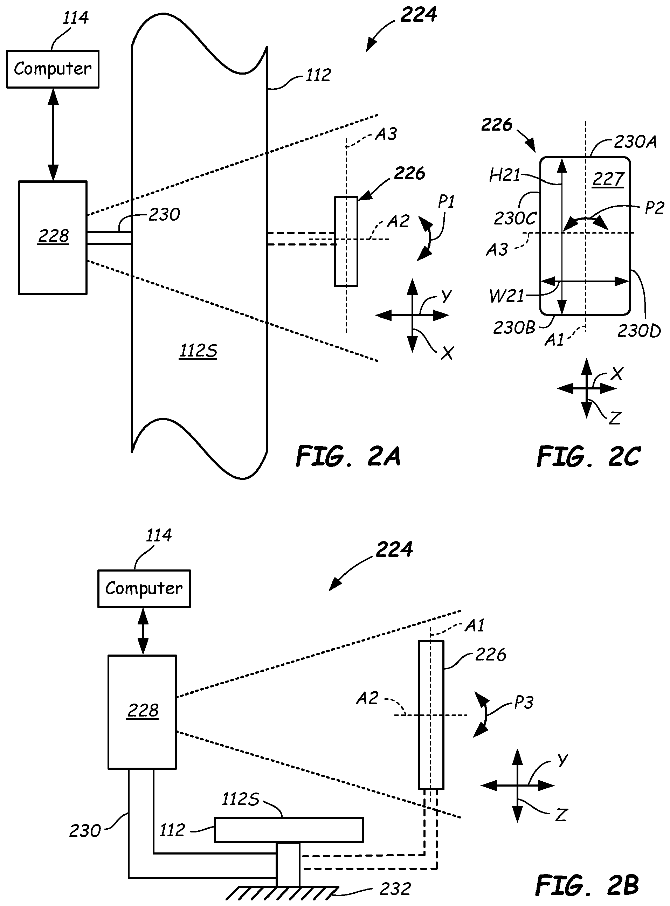

Reference is made to FIG. 2A, which illustrates a top plan view of a schematic block diagram of an embodiment of an alignment system 224 configured to align a component 226 to as structure in the diagnostic laboratory system 100 (FIG. 1). In the embodiments, described herein, the structure is the track 112. In some embodiments, the alignment system 224 and other alignment systems described herein may be configured to align the component 226 to a transport system that may include the track 112 and/or components of the track 112. In some embodiments, the component 226 may be a fiducial marker. In some embodiments, the component 226 may be a portion of one of the modules 108 (FIG. 1), the instrument 109 (FIG. 1), another module, or attached to one of the modules 108 or the instrument 109. Reference is also made to FIG. 2B, which is a top view of the component 226 of FIG. 2A. Reference is also made to FIG. 2C, which is a front elevation view of an embodiment of the component 226 and alignment system 224.

In the embodiment of FIGS. 2A-2B, the alignment system 224 may include a position sensor, which may be an imaging device 228. In the embodiment of FIGS. 2A-2B, the imaging device 228 may be coupled to the track 112 or other portion of the transport system by a structural member 230. In some embodiments, both the imaging device 228 and the track 112 may be coupled or affixed to a common structure, such as a chassis 232 or the like. In some embodiments, the chassis 232 may be a portion of the transport system. In some embodiments, the chassis 232 may be a chassis member of a module 108 or an instrument 109. Thus, in the embodiments of FIGS. 2A-2B, the imaging device 228 is maintained in a fixed position relative to the track 112. Other types of position sensors (e.g., other than imaging devices) may be used as described herein.

The imaging device 228 and other imaging devices described herein may be conventional digital cameras, such as color or monochrome cameras. In some embodiments, the imaging device 228 may be a lens system coupled with an imager. The imager may include a charged coupled device, an array of photodetectors, a CMOS sensor(s), or the like.

In the embodiment of FIGS. 2A-2C, the component 226 may be a reflective device configured to be imaged by the imaging device 228. The term imaging includes capturing an image and generating image data representative of the captured image. In other embodiments, the component 226 may be a light source, such as a light panel that is configured to be imaged by the imaging device 228. As described herein, the component 226 may be moveable relative to the imaging device 228. Thus, the component 226 may be moveable relative to the track 112. In some embodiments, the component 226 may be fixed relative to the track 112 after being properly aligned with the track 112.

In the embodiments of FIGS. 2A-2B, the component 226 may be movable and pivotable in three-dimensional space. The location or position of the component 226 may be referred to as the pose of the component 226. The component 226 may be movable in a Y-direction, which is toward and away from the track 112. The component 226 also may be movable in an X-direction, which is parallel to the track 112. The component 226 also may be movable in a z-direction, which raises and lowers the component 226 relative to the track 112.

In some embodiments, the component 226 also may pivot relative to the track 112. In some embodiments, the component 226 may pivot in a first pivot direction P1 about a first axis A1. In some embodiments, the component 226 may pivot in a second pivot direction P2 about a second axis A2. In some embodiments, the component 226 may pivot in a third pivot direction P3 (FIG. 2B) about a third axis A3. In other embodiments, the component 226 may not be configured to move and/or pivot in as many directions as shown in FIGS. 2A-2C. As described herein, the component 226 may be moved in at least one of the directions described above to align the component 226 to the track 112. Once aligned, the component 226 may be secured so that the component 226 does not move (is fixed) relative to the track 112.

Reference is made to FIG. 2C, which illustrates a front elevation view of a front surface 227 of an embodiment of the component 226. In the embodiment of FIG. 2C, the front surface 227 of the component 226 is rectangular. However, the front surface 227 of the component 226 may have other shapes. The front surface 227 may be bounded by a top edge 230A, an opposite bottom edge 230B, a left edge 230C, and an opposite right edge 230D. The front surface 227 may have a height H21 extending between the top edge 227A and the bottom edge 227B. The front surface 227 may have a width W21 extending between the left edge 230C and the right edge 230D. In some embodiments, the corners of the front surface 227 may be rounded as shown in FIG. 2C.

The imaging device 228, which in the embodiments of FIGS. 2A-2B may be in a fixed location relative to the track 112, may capture an image of the front surface 227 of the component 226. Capturing an image may be referred to as imaging, such as imaging the front surface 227 of the component 226. During imaging, the imaging device 228 generates image data representative of the front surface 227 of the component 226. The image data may be processed, such as by computer 114, as described herein, to align the component 226 to the track 112.

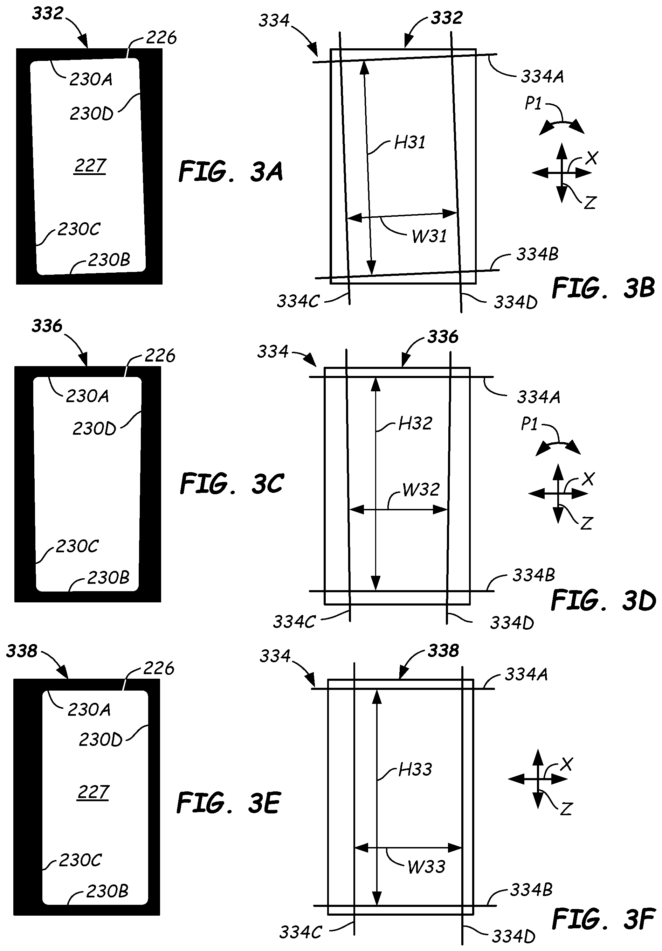

Reference is made to FIG. 3A, which illustrates an embodiment of an image 332 captured by the imaging device 228 (FIGS. 2A-2B) that includes an imaging window including the front surface 227 of the component 226. The image 332 includes a black background because, in the embodiments described herein, the background in the alignment system 224 (FIGS. 2A-2B) does not include any other components that reflect light, so only the front surface 227 of the component 226 is imaged. The image 332 may be analyzed by programs executed on a computer, such as the programs 114C (FIG. 1) executed on the computer 114.

The computer 114 (e.g., the programs 114C executed by the computer 114) may analyze the image 332 to identify the edges 230A-230D of the front surface 227 of the component 226. The edges may be identified as lines or segments defining sharp contrasts in light intensity in the image 332. Reference is made to FIG. 3B, which illustrate edge lines 334 identified by analyzing the image 332. In the embodiment of FIG. 3B, the following edge lines have been identified: a top edge line 334A corresponding to the top edge 230A of the front surface 227; a bottom edge line 334B corresponding to the bottom edge 230B of the front surface 227; a left edge line 334C corresponding to the left edge 230C of the front surface 227; and a right edge line 334D corresponding to the right edge 230D of the front surface 227.

In the embodiment of FIG. 3A, the image 332 shows that the component 226 is rotated relative to the X-Z coordinate system. Specifically, the component 226 is pivoted in the counter-clockwise direction about the pivotal direction P2 relative to the imaging device 228 (FIGS. 2A-2B). The programs 114C may identify the edge lines 334 and, based on the locations and directions of axes along the edge lines 334, determine the alignment of the component 226 relative to the imaging device 228 (FIGS. 2A-2B), such as with the X-axis and the Z-axis. For example, in the embodiment of FIG. 3B, the top edge line 334A may be identified as being parallel with the bottom edge line 334B and the left edge line 334C may be identified as being parallel with the right edge line 334D. In the embodiments described herein, proper alignment of the front surface 227 of the component 226 is parallel with the track 112 with respect to the axis A3 and perpendicular or normal to the axis A2. In addition, proper alignment may require the left edge 230C and the right edge 230D being perpendicular to a surface 112S (e.g., top or other suitable surface) of the track 112 and the top edge 230A and the bottom edge 230B are parallel to the track 112.

Further analysis of the edge lines 334 may determine a height H31 between the top edge 334A and the bottom edge 334B. The analysis may also determine a width W31 between the left edge 334C and the right edge 334D. If the height H21 (FIG. 2C) corresponds to the height H31, then the front surface 227 of the component 226 is properly aligned with respect to the axis A3 (FIGS. 2A, 2C). If the width W21 (FIG. 2C) corresponds to the width W31, then the front surface 227 of the component 226 aligned to the track 112 with respect to the axis A1.

Based on the above-described analysis, the computer 114 or the programs 114C executed on the computer 114, may determine that the component 226 may solely need to be rotated (e.g., pivoted clockwise) in the direction P2. In some embodiments, the computer 114 or other device may indicate to a user the amount of rotation of the component 226 is required for proper alignment. In some embodiments, the imaging device 228 may be a video device or the like that continually or periodically images the component 226 as the component 226 is aligned. Thus, the user may receive continuous feedback of alignment procedures. In other embodiments, the computer 114 may check the alignment of the component 226, such as after manual alignment by the user, and may indicate whether an additional alignment should be performed. In other embodiments, the computer 114 may check the alignment at any suitable interval during use of the diagnostic laboratory system 100 and may provide an indication to the user if alignment of the component 226 is necessary, or if the alignment is still proper.

Additional reference is made to FIG. 3C, which illustrates an image 336 of the component 226, wherein the component 226 is tilted such that the top edge 230A is closer to the track 112 or the imaging device 228 than the bottom edge 230B. For example, the component 226 may be tilted (e.g., misaligned) about the axis A3. Additional reference is made to FIG. 3D, which illustrates the edge lines 334 identified in the image 336. The analysis of the edge lines 334 in FIG. 3D may identify that the top edge line 334A and the bottom edge line 334B are parallel. The analysis may also identify that the left edge line 334C and the right edge line 334D are not parallel. In the embodiment of FIGS. 3C-3D, the top edge line 334A is longer than the bottom edge line 334B indicating that the top edge 230A of the component 226 is closer to the imaging device 228 than the bottom edge 230B of the component 226. The component 226 may be aligned as described above. For example, the component 226 may be rotated about the axis A3.

Additional reference is made to FIG. 3E, which illustrates an image 338 of the component 226, wherein the component 226 is rotated about the axis A1 (FIGS. 2B, 2C) and shifted along the X-axis relative to the imaging device 228. The programs 114C or the like may determine that the component 226 is shifted by measuring the distance between at least one of the edges 334 and at least one of edges of the image 338. If the distances are not within predetermined tolerances, the component 226 may be misaligned, such as shifted in the X-axis and/or the Z-axis relative to the imaging device 228. In the embodiment of FIGS. 3E-3F, the left edge line 334C is spaced a distance from the left edge of the image 338 and the right edge line 334D is close to the right edge of the image 338. If the left edge line 334C and the right edge line 334D are not in the right locations relative to the edges of the image 338, the component 226 may be misaligned in the X-axis. The programs 114C, for example, may provide an indication of the misalignment to the user. In some embodiments, the programs 114C or other algorithms may analyze the image 338 and determine the direction and distance of the misalignment and may provide this information to the user. The user may then align the component 226 and another image of the component 226 may be captured to check the alignment.

As described above, the component 226 can also be misaligned about the axis A1. Such misalignment may be detected and/or analyzed by measuring the width W33 between the left edge line 334C and the right edge line 334D. In other embodiments, a measured ratio of the width W33 to the height H33 may be compared to a predetermined ratio. If the measured ratio is less than the predetermined ratio, the programs 114C may determine that the component 226 may be misaligned about the axis A1. If the measured ratio is greater than the predetermined ratio, the component 226 may be misaligned about the axis A3 (FIGS. 2A, 2C). The programs 114C, for example, may provide an indication of the misalignment to the user as described above. In some embodiments, the programs 114C or other algorithms may analyze the image 338 and determine the direction and distance of the misalignment and may provide this information to the user.

In some embodiments, different methods may be used to align the component 226. For example, the pose of the component 226 may be estimated using perspective-n-point methods. In some embodiments, the pose may be in six dimensions as describe above, which may include the x, y, and z coordinate system in addition to pitch, yaw, and roll of the axis A1, the axis A2, and the axis A3. Other estimation methods may be used.

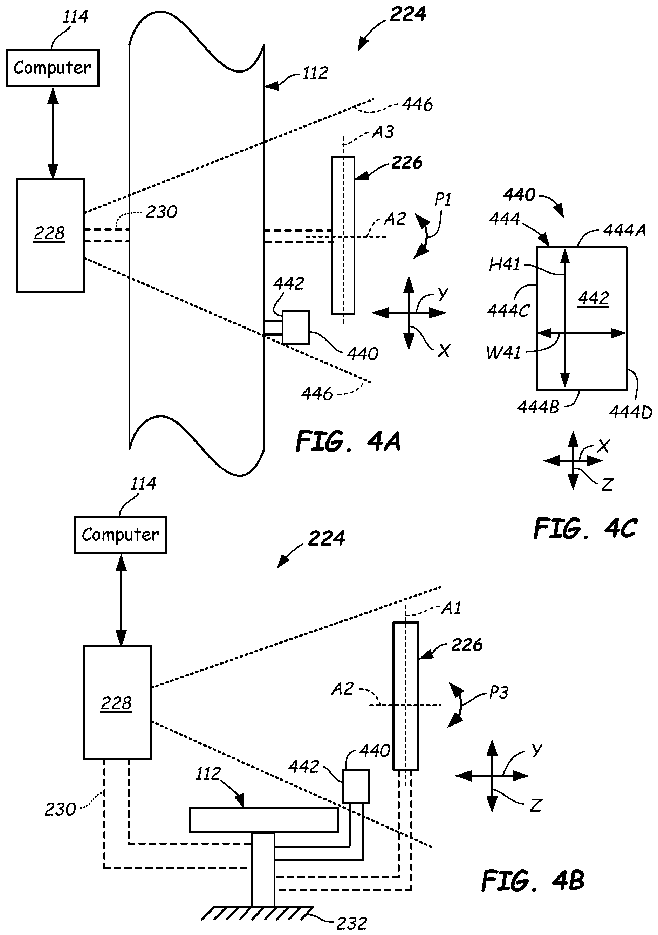

Reference is now made to FIGS. 4A-4C, which illustrate block diagrams of the alignment system 224 including a fiducial marker 440 located in a fixed position relative to the track 112. The fiducial marker 440 may be located in fixed positions relative to other components of the diagnostic laboratory system 100 (FIG. 1). Reference is made to FIG. 4C, which illustrates a front elevation view of the fiducial marker 440 showing a front surface 442. The front surface 442 is configured to be imaged by the imaging device 228 in a similar or identical manner as the component 226 (FIG. 2C). The front surface 442 of the fiducial marker 440 may be bounded by a plurality of edges 444 that define a shape of the front surface 442. In the embodiment of FIG. 4C, the front surface 442 is bounded by four edges 444 that define a rectangle and are referred to individually as a top edge 444A, a bottom edge 444B, a left edge 444C, and a right edge 444D. The front surface 442 may have a height H41 extending between the top edge 444A and the bottom edge 444B. The front surface 442 may also have a width W41 extending between the left edge 444C and the right edge 444D. The front surface 442 may have other shapes.

The fiducial marker 440 is positioned in a location in the diagnostic laboratory system 100 that enables the fiducial marker 440 to be imaged by the imaging device 228. The fiducial marker 440 may be in a fixed and predetermined location relative to the track 112. The imaging device 228 may be movable relative to the track 112 for alignment procedures and then re-fixed relative to the track 112. During movement (e.g., alignment) of the imaging device 228 and/or when the imaging device 228 is fixed, the fiducial marker 440 may be in a field of view 446 of the imaging device 228. During operation of the alignment system 224, the imaging device 228 may capture an image of the front surface 442 of the fiducial marker 440. The captured image may be analyzed to align the imaging device 228 to the track 112 as described herein.

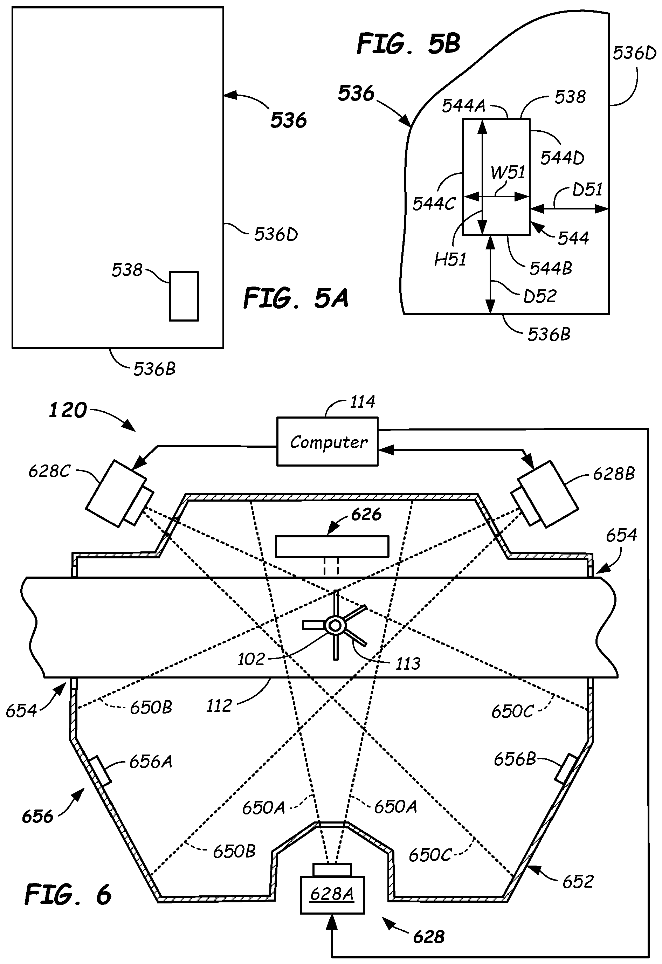

Additional reference is made to FIG. 5A, which illustrates an embodiment of an image 536 captured using the imaging device 228 and that includes a marker image 538 of the front surface 442 of the fiducial marker 440. It is noted that the image 536 may include other objects located in the field of view 446 of the imaging device 228. The image 536 may be bounded by a top edge a bottom edge 536B, a left edge, and a right edge 536D.

Reference is also made to FIG. 5B, which shows an enlarged view of the marker image 538 within the image 536. The marker image 538 may be identified by edges 544 that correlate with the edges 444 of the fiducial marker 440. A top edge 544A may correlate with the top edge 444A, a bottom edge 544B may correlate with a bottom edge 544B, a left edge 544C may correlate with the left edge 544C, and a right edge 544D may correlate with the right edge 544D. The marker image 538 may have a width W51 extending between the left edge 544C and the right edge 544D. The marker image 538 may have a height H51 extending between the top edge 544A and the bottom edge 544B. The height H51 and the width W51 may be measured in pixels, which are imaging elements of the imaging device 228.

Alignment of the imaging device 228 to the track 112, which is aligned to the fiducial marker 440 may include determining the location of the marker image 538 in the image 536. For example, proper alignment may include adjusting the position on the imaging device 228 to where the marker image 538 is in a predetermined location in the image 536. In the embodiment of FIGS. 5A-5B, the proper alignment includes moving the imaging device 228 to a point where the right edge 544D is parallel and located a distance D51 from the right edge 536D of the image 536, for example. Proper alignment may also include moving the imaging device 228 to a point where the bottom edge 544B is parallel to and located a distance D52 from the bottom edge 536B of the image 536, for example.

When the imaging device 228 has been properly aligned to the track 112 with the alignment procedure, the imaging device 228 may be fixed relative to the track 112. For example, the imaging device 228 may be fixed to a mounting device or the like structure that is also fixed relative to the track 112. The imaging device 228 may then be used to align components to the track 112 as described herein, and may be used to recheck alignment of the track 112 during use.

Reference is now made to FIG. 6, which illustrates a partially cross-sectioned top view of an embodiment of the quality check module 120 of the diagnostic laboratory system 100 (FIG. 1). The diagnostic laboratory system 100 may include other types of quality check modules and other modules that include imaging systems as described with reference to the quality check module 120. The quality check module 120 may be configured to automatically characterize a physical structure (e.g., size) of the specimen containers 102. In this manner, the size (e.g., width and height) of the specimen containers 102 are known for any subsequent processing. The quality check module 120 may also be used to quantify the specimen containers 102, i.e., quantify certain physical dimensional characteristics of the specimen containers 102 and/or a color of, and/or type of, caps (not shown) capping the specimen containers 102.

In addition, other detection methods may take place on the specimens contained in the specimen containers 102. For example, the quality check module 120 may be used to quantify the specimens, i.e., determine certain physical dimensional characteristics of the specimens such as a volume of a serum or plasma portion and/or a volume of a settled blood portion. The characterization method may be carried out by the quality check module 120 prior to the specimen containers 102 being processed by one or more of the modules 108 and/or the instrument 109. As discussed above, the quality check module 120 may also characterize whether the serum or plasma portion contains HIL or is normal (N).

The quality check module 120 may include one or more imaging devices 628. The imaging devices 628 may be identical or substantially similar to the imaging device 228 (FIGS. 2A-2B). In the embodiment of FIG. 6, the quality check module 120 includes three imaging devices that are referred to individually as a first imaging device 628A, a second imaging device 628B, and a third imaging device 628C. The first imaging device 628A may have a first field of view 650A, the second imaging device 628B may have a second field of view 650B, and the third imaging device 628C may have a third field of view 650C. The imaging devices 628 may be configured to capture images of the specimen containers 102 from multiple viewpoints, the specimens located in the specimen containers 102, the carriers 113, and/or other components within the quality check module 120.

The quality check module 120 may be at least partially enclosed by a housing 652. The housing 652 may include one or more openings 654 configured to enable the track 112 and the specimen containers 102 to pass into and out of the housing 652. The housing 652 may be configured to keep extraneous light from entering the quality check module 120 and interfering with images being captured by the imaging devices 628.

The quality check module 120 may include one or more illumination sources located in the housing 652. In the embodiment of FIG. 6, the quality check module 120 may include a single illumination source 626, which in the embodiment of FIG. 6 may be a reflector. The illumination source 626 may, as an example, reflect light emitted from a light source (not shown) within the housing 652. The illumination source 626 may be desired to be positioned (e.g., aligned) in a predetermined position relative to the track 112 within the housing 652. The illumination source 626 may be movable (position adjustable) in the same or similar manner as the component 226 (FIGS. 2A-2B) for alignment purposes. In the embodiment of FIG. 6, the illumination source 626 may be located in the first field of view 650A, which is associated with the first imaging device 628A. Thus, images of the illumination source 626 may be captured by the first imaging device 628A to align the illumination source 626 to the track 112 as described herein.

One or more of the imaging devices 628 may capture images of other components in the quality check module 120. The images and be processed as described herein and may be used to align these other components to the track 112.

In some embodiments, the housing 652 may have one or more fiducial markers 656 affixed to the interior of the housing 652. The fiducial markers 656 may be identical or substantially similar to the fiducial marker 440 (FIG. 4) and the component 226 (FIGS. 2A-2C) and may be imaged by the imaging devices 628 as described herein. In the embodiment of FIG. 6, the housing 652 has a first fiducial marker 656A and a second fiducial marker 656B affixed to the interior of the housing 652. The first fiducial marker 656A may be located in the second field of view 652B and the second fiducial marker 656B may be located in the third field of view 652C. Images of the first fiducial marker 656A may be captured by the second imaging device 628B and images of the second fiducial marker 656B may be captured by the third imaging device 628C. The images of the first fiducial marker 656A and the second fiducial marker 656B may be used to align the housing 652 to the track 112 using the alignment systems and methods described herein.

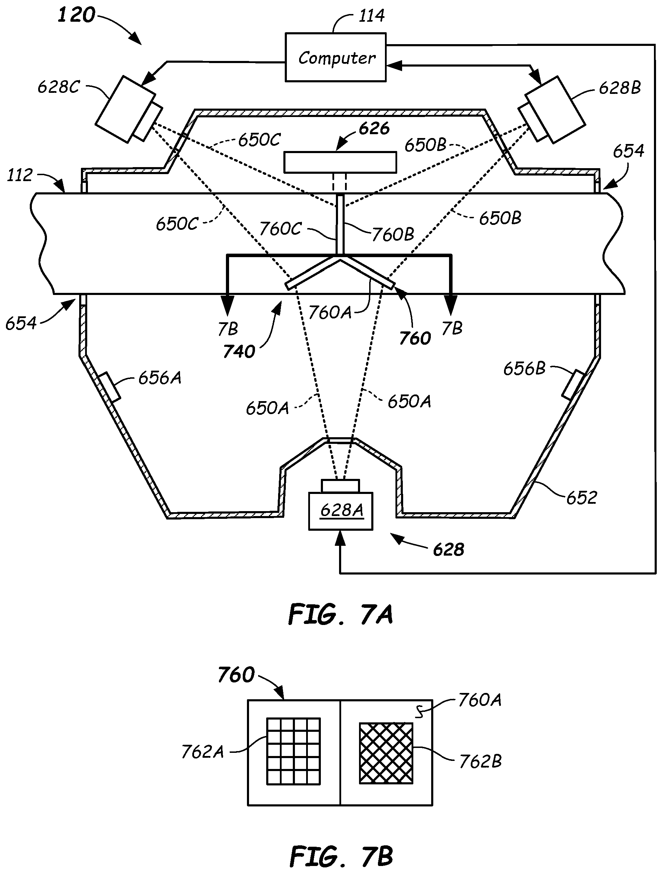

Reference is now made to FIG. 7A, which illustrates the quality check module 120 of FIG. 6 with an alignment tool 760 located on the track 112. The alignment tool 760 may be positioned at a predetermined location on the track 112 and, thus, may be used as a fiducial marker 740 (Like fiducial marker 440 in FIGS. 4A-4B). For example, the alignment tool 760 may align the imaging devices 628 to the track 112 as described above. The alignment tool 760 depicted in FIG. 7A is Y-shaped. The alignment tool 760 may have other shapes.

The embodiment of the alignment tool 760 depicted in FIG. 7A includes three faces, wherein each of the imaging devices 628 is configured to capture an image of a face. For example, a first face 760A is in the first field of view 650A and is positioned to be imaged by the first imaging device 628A. A second face 760B is in the second field of view 650B and is positioned to be imaged by the second imaging device 628B. A third face 760C is in the third field of view 650C and is positioned to be imaged by the third imaging device 628C.

Additional reference is made to FIG. 7B, which illustrates a side elevation view of the first face 760A of the alignment tool 760. The first face 760A may be configured to be captured by the first imaging device 628A. In some embodiments, edges of the first face 760A may be identified and processed in a similar manner or identical manner as the edges 334 (FIGS. 3B, 3D, and 3F). In some embodiments, the first face 760A may include one or more patterns at known fixed positions on the alignment tool 760 that may be identified by the programs 114C (FIG. 1). In the embodiment of FIG. 7B, the first face 760A includes a first fiducial image 762A and a second fiducial image 762B that may be imaged by the first imaging device 628A. The other faces of the alignment tool 760 may include similar or identical fiducial images.

During alignment using the alignment tool 760, the alignment tool 760 may be placed or otherwise located at a predetermined position on the track 112. The first imaging device 628A may then capture one or more images of the first face 760A of the alignment tool 760. Because the alignment tool 760 is located in a predetermined position relative to the track 112, the images captured by the first imaging device 628A may then be used to align the first imaging device 628A to the alignment tool 760 and, thus, the track 112. Other components of the quality check module 120 may then be aligned based on the alignment of the first imaging device 628A to the track 112. The other imaging devices may capture images of the other faces of the alignment tool 760 to align those imaging devices to the track 112.

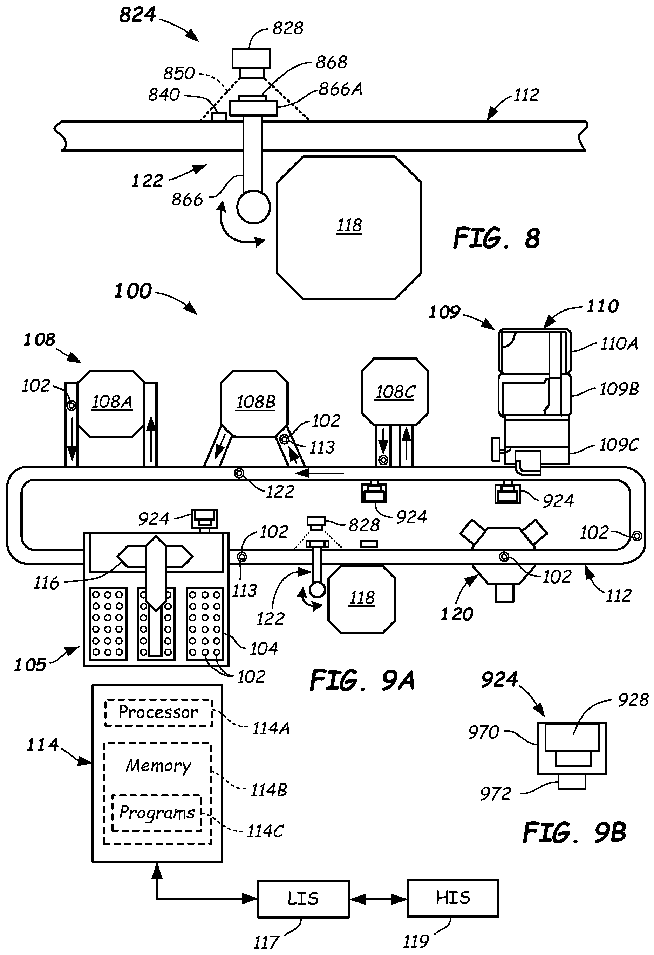

Reference is made to FIG. 1 to illustrate other implementations of the alignment system 224 (FIGS. 2A-2B). One or more position sensors or imaging devices may be located at one or more locations throughout the diagnostic laboratory system 100 to align other components within the diagnostic laboratory system 100. Reference is made to FIG. 8, which illustrates an enlarged portion of the diagnostic laboratory system 100 of FIG. 1 including an imaging device 828 implemented as a position sensor in an alignment system 824. The alignment system 824 depicted in FIG. 8 is configured to align the robot 122 to the track 112.

The robot 122 may include an arm 866 that is movable relative to the track 112. An element 866A may be attached to the arm 866 and may be configured to be imaged by the imaging device 828. In some embodiments, the element 866A may be similar to the component 226 (FIGS. 2A-2C) and may be imaged in a similar or identical manner. The image data representative of the element 866A may be processed in a similar manner as the component 226. In some embodiments, the element 866A may have a fiducial marker 868 attached within a field of view 850 of the imaging device 828. The fiducial marker 868 may be identical or substantially similar to the fiducial marker 440 (FIGS. 4A-4C).

In some embodiments, the imaging device 828 may be affixed in a predetermined location relative to the track 112. For example, a structure, mount, or other hardware may secure the imaging device 828 to a structure of the track 112. Images of the element 866A and/or the fiducial marker 868 may be captured using the imaging device 828 and processed by computer 114. Because the imaging device 828 is in a predetermined position relative to the track 112, the processing described herein may be used to align the arm 866 and/or the element 866A to the track 112. For example, a coordinate system associated with the imaging device 828 may be aligned with a coordinate system associated with the element 866A. The position of the arm 866 and/or the element 866A may be moved to a point wherein the arm 866 and/or the element 866A are in a predetermined location relative to the imaging device 828 and, thus, the track 112.

In some embodiments, the imaging device 828 may not be permanently affixed to the track 112 and may be aligned to the track 112 prior to using the imaging device 828 to align the arm 866 and/or the element 866A to the track 112. In such embodiments, the alignment system 824 may include a fiducial marker 840 affixed to the track or structure of the track 112. The fiducial marker 840 may be substantially similar or identical to the fiducial marker 440 (FIGS. 4A-4C) and may be imaged as described with reference to FIGS. 4A-4C. The imaging device 828 may then be aligned to the track 112 as described with reference to the imaging device 228 (FIGS. 4A-4C).

In some embodiments, the diagnostic laboratory system 100 may include multiple alignment systems that are configured to align different components in the diagnostic laboratory system 100. One or more of the alignment systems may include a pocket or a securing device configured to secure an imaging device relative to the track 112. Reference is made to FIG. 9A, which illustrates the diagnostic laboratory system 100 with a plurality of alignment systems 924. Reference is also made to FIG. 9B, which illustrates an enlarged view of an alignment system 924A, which may be identical or substantially similar to the alignment systems 924. The alignment system 924A may include a securing device 970 configured to receive and/or secure an imaging device 928 relative to the track 112. The imaging device 928 may be identical or substantially similar to the imaging device 228 (FIGS. 2A-2C). A coupling mechanism 972 may attach the securing device 970 to the track 112 and/or a component of the track 112 and/or a component of the diagnostic laboratory system 100.

During assembly and/or operation of the diagnostic laboratory system 100, the securing device 970 of one or more of the alignment systems 924 may receive an imaging device 928. The imaging device 928 may be in a fixed location relative to the track 112 by way of the coupling of the securing device 970 to the track 112 by the coupling mechanism 972 or any suitable structure. The imaging device 928 may capture images as described herein that may be processed to determine alignment of various components of the diagnostic laboratory system 100 to the track 112.

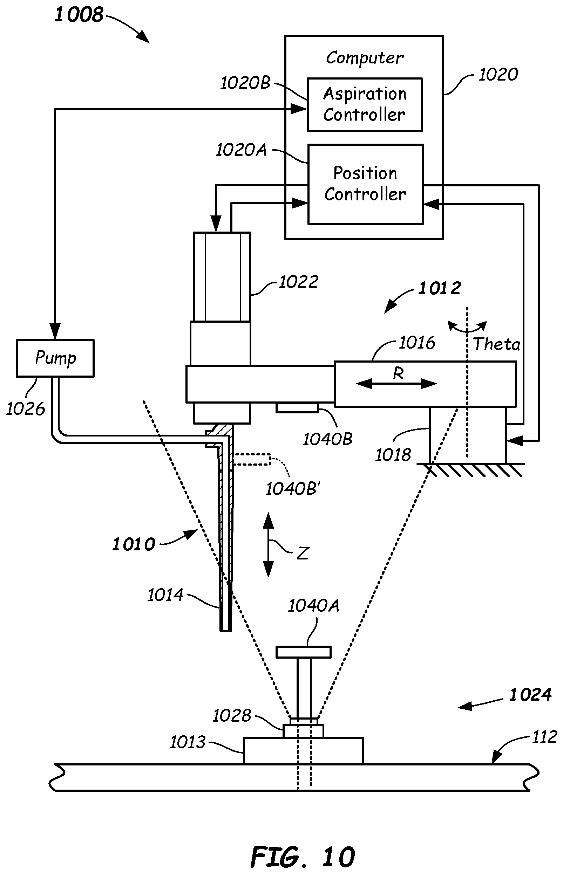

Reference is now made to FIG. 10, which illustrates an alignment system 1024 implemented into an aspiration and dispense module 1008, which may be one of the modules 108 within the diagnostic laboratory system 100 (FIG. 1). The aspiration and dispense module 1008 may aspirate and dispense liquids from the specimen containers 102 (FIG. 1) and into containers such as cuvettes (not shown) or passages. The aspiration and dispense module 1008 may include a pipette assembly 1010 that is moveable by a robot 1012. Robot may be a R-Theta-Z robot, as shown. Other suitable robot types may be used.

The pipette assembly may include a probe 1014 (pipette) that is inserted into liquid containers (e.g., specimen containers 102) to aspirate and dispense liquids from and into the containers or passages. Some container openings may be very small, so the probe 1014 has to be precisely positioned relative to the container openings in order to avoid colliding with the container openings. In some embodiments, the probe 1014 may house fluid level sensors (not shown), which may be damaged during any such collisions. Correct positioning of the probe 1014 also ensures that the desired liquid gets aspirated rather than air from outside the liquid container.

The robot 1012 may include one or more arms configured to move the pipette assembly 1010 and, thus, the probe 1014. In some embodiments, the arms may be configured to move the pipette assembly 1010 in three-dimensional space and in other embodiments, the arms may be configured to move the pipette assembly 1010 in two-dimensional space. In the embodiment of FIG. 10, one arm 1016 of the robot 1012 is shown. The arm 1016 may be coupled to a first motor 1018 that is configured to move the arm 1016 within the aspiration and dispense module 1008. The first motor 1018 may be controlled by a position controller 1020A implemented in a computer 1020. The arm 1016 may have a second motor 1022 configured to move the pipette assembly 1010 and, thus, the probe 1014 in a vertical or Z-direction to access openings of liquid containers. The second motor 1022 may be controlled by the position controller 1020A. The aspiration and dispense module 1008 may also include a pump 1026 that is configured to aspirate and dispense liquids by the probe 1014. The pump 1026 may be controlled by an aspiration controller 1020B implemented in the computer 1020.

In the embodiment of FIG. 10, a carrier 1013 moveable on the track 112 may transport a position sensor implemented as an imaging device 1028 on the track 112. The imaging device 1028 may be moved to a predetermined location on the track 112 where the imaging device 1028 may capture images of one or more components of the pipette assembly 1010. In the embodiment of FIG. 10, the aspiration and dispense module 1008 may include a first fiducial marker 1040A fixedly coupled to the track 112. The first fiducial marker 1040A may be identical or substantially similar to the fiducial marker 440 (FIGS. 4A-4C) and may be configured to be imaged by the imaging device 1028. In some embodiments, the aspiration and dispense module 1008 may include a second fiducial marker 1040B (and/or 1040B' shown dotted) that may be movable with the pipette assembly 1010 and/or the probe 1014. The second fiducial marker 1040B, 1040B' may be substantially identical or similar to the component 226 (FIGS. 2A-2C). The second fiducial marker 1040B, 1040B' is positioned to be imaged by the imaging device 1028.

During operation of the aspiration and dispense module 1008, the carrier 1013 may move the imaging device 1028 to a location where the imaging device 1028 may capture one or more images of the first fiducial marker 1040A and the second fiducial marker 1040B, 1040B'. The first fiducial marker 1040A may be located in a predetermined location relative to the track 112. Thus, one or more images of the first fiducial marker 1040A may be used to establish a coordinate system of the imaging device 1028 relative to the track 112 as described herein. The imaging device 1028 may then capture one or more images of the second fiducial marker 1040B, 1040B' and process the images in a manner identical to or substantially similar to images of the component 226 (FIGS. 2A-2B). Thus, the precise position of the pipette assembly 1010 and the probe 1014 may be calculated. In some embodiments, the imaging device 1028 may capture images of the pipette assembly 1010 or the probe 1014 instead of the second fiducial marker 1040B'. The images may be processed as described herein to align the pipette assembly 1010 or the probe 1014 to the track 112.

The processing may be performed by the programs 114C (FIG. 1). In some embodiments, feedback may be provided to a user to align the pipette assembly 1010 and/or the probe 1014 in precise locations relative to the track 112.

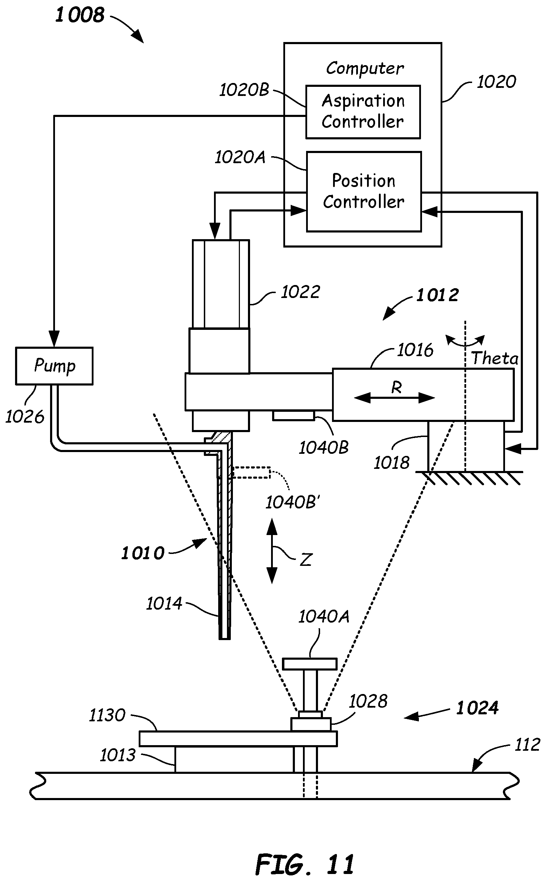

Reference is now made to FIG. 11, which illustrates the aspiration and dispense module 1008 wherein the position sensor of the alignment system 1024 may include a touch sensor 1130 that generates position data when contacted by the probe 1014. In the embodiment of FIG. 11, the touch sensor 1130 may be moved to a precise location relative to the track 112 as described above. The position controller 1020A may then cause the pipette assembly 1010 to move the probe 1014 in the Z-direction until the probe 1014 contacts the touch sensor 1130. The touch sensor 1130 may then generate position data indicating the location of the contact of the probe 1014 relative to the touch sensor 1130. The location of the contact of the probe 1014 may then be determined relative to the track 112. Feedback may be provided to enable a user to align the probe 1014 to the track 112.

In some embodiments, the alignment system 1024 may include an imaging device 1028 that may function as described with reference to FIG. 10. For example, the imaging device 1028 may image the first fiducial marker 1040A to align the touch sensor 1130 to the track or to another predetermined location. The probe 1014 may then contact the touch sensor 1130. Data generated by the touch sensor 1130 may precisely determine the location of the probe 1014 relative to the track 112. The probe 1014 may then be aligned relative to the track 112. The location may be verified by imaging second fiducial marker 1040B'.

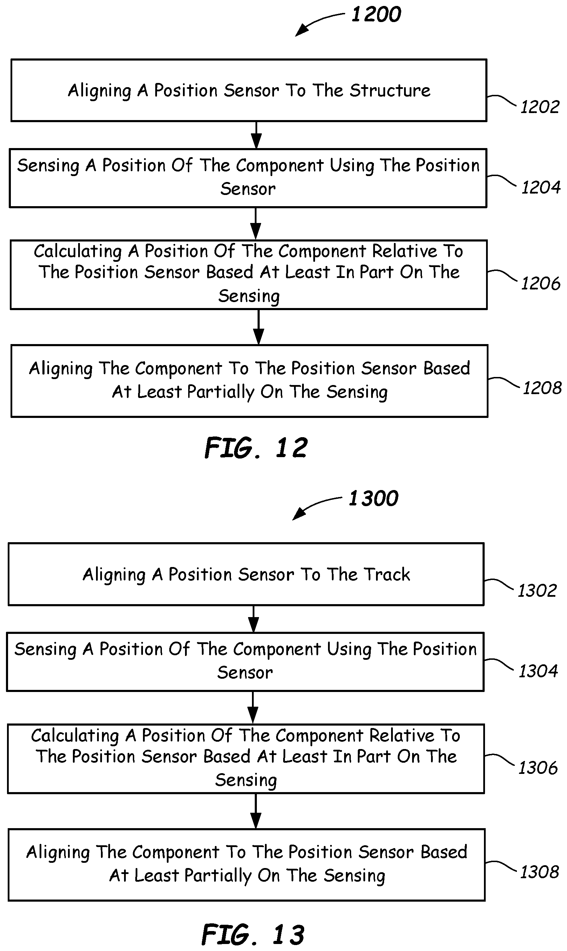

Additional reference is made to FIG. 12, which is a flowchart describing a method 1200 of aligning a component (e.g., component 226) to a structure (e.g., track 112) in a diagnostic laboratory system (e.g., diagnostic laboratory system 100). The method 1200 includes, in 1202, aligning a position sensor (e.g., imaging device 228 or touch sensor 1130) to the structure. The method 1200 includes, in 1204, sensing a position of the component using the position sensor. The method 1200 includes, in 1206, calculating a position of the component relative to the position sensor based at least in part on the sensing. The method 1200 includes, in 1208, aligning the component to the position sensor based at least partially on the sensing.

Additional reference is made to FIG. 13, which is a flowchart describing a method 1300 of aligning a component (e.g., component 226) to a track (e.g., track 112) in a diagnostic laboratory system (e.g., diagnostic laboratory system 100). The method 1300 includes, in 1302, aligning a position sensor (e.g., imaging device 228 or touch sensor 1130) to the track. The method 1300 includes, in 1304, sensing a position of the component using the position sensor. The method 1300 includes, in 1306, calculating a position of the component relative to the position sensor based at least in part on the sensing. The method 1300 includes, in 1308, aligning the component to the position sensor based at least partially on the sensing.

While the disclosure is susceptible to various modifications and alternative forms, specific apparatus embodiments and methods thereof have been shown by way of example in the drawings and are described in detail herein. It should be understood, however, that it is not intended to limit the disclosure to the particular apparatus or methods disclosed but, to the contrary, the intention is to cover all modifications and alternatives falling within the scope of the claims.

## Claims

1. A method of aligning a component (226, 1010, 1014) to a structure (112) during assembly and operation of a diagnostic laboratory system (100), comprising:
aligning a position sensor (228, 1028, 1130) to the structure (112);
sensing a position of the component (226, 1010, 1014) using the position sensor (228, 1028, 1130);
calculating a position of the component (226, 1010, 1014) relative to the position sensor (228, 1028, 1130) based at least in part on the sensing; and
aligning the component (226, 1010, 1014) to the position sensor (228, 1028, 1130) based at least partially on the sensing,
wherein the position sensor (1130) is a touch sensor (1130) and wherein sensing a position of the component (1014) comprises touching the component (1014) to the touch sensor (1130), or
wherein the position sensor (1130) is a touch sensor (1130) and wherein the component (1014) is movable by a robot (1012), and wherein sensing the position of the component (1014) comprises moving the robot (1012) to where the component (1014) touches the touch sensor (1130).

2. The method of claim 1, wherein aligning the position sensor (228, 1028, 1130) comprises aligning the position sensor (228, 1028, 1130) to a transport system or to a track (112).

3. The method of claim 1, wherein aligning the component (226) comprises securing the component (226) in a fixed location after aligning the component (226) to the position sensor (228, 1130).

4. The method of claim 1, wherein aligning the position sensor (228) to the structure (112) comprises affixing the position sensor (228) to the structure (112).

5. The method of claim 1, wherein the component is at least a portion of a housing (652) configured to at least partially enclose a module (120) of the diagnostic laboratory system (100).

6. The method of claim 1, wherein the component (226, 1010, 1014) comprises a fiducial marker (1040B, 1040B'), or wherein the method comprises attaching a fiducial marker (1040B, 1040B') to the component (226, 1010, 1014), wherein:
sensing a position of the component (226, 1010, 1014) comprises sensing a position of the fiducial marker (1040B, 1040B') using the position sensor (228, 1028, 1130);
calculating the position of the component (226, 1010, 1014) comprises calculating the position of the fiducial marker (1040B, 1040B') relative to the position sensor (228, 1028, 1130) based at least in part on the sensing; and
aligning the component (226, 1010, 1014) to the position sensor (228, 1028, 1130) comprises aligning the fiducial marker (1040B, 1040B') to the position sensor (228, 1028, 1130) based at least partially on the sensing.

7. The method of claim 1, comprising providing a securing device (972) coupled to the structure (112), wherein aligning the position sensor (228, 1028, 1130) to the structure (112) comprises securing the position sensor (228, 1028, 1130) to the securing device (972).

8. A method of aligning a component (226, 1010, 1014) to a structure (112) during assembly and operation of a diagnostic laboratory system (100), comprising:
aligning a position sensor (228, 1028, 1130) to the structure (112);
sensing a position of the component (226, 1010, 1014) using the position sensor (228, 1028, 1130);
calculating a position of the component (226, 1010, 1014) relative to the position sensor (228, 1028, 1130) based at least in part on the sensing; and
aligning the component (226, 1010, 1014) to the position sensor (228, 1028, 1130) based at least partially on the sensing,
further comprising providing a fiducial marker (440, 1040A) affixed to the structure (112); wherein:
the position sensor (228, 1028) is an imaging device (228, 1028); and
aligning the position sensor (228, 1028) comprises capturing an image (536) of the fiducial marker (440, 1040A) using the imaging device (228, 1028) and determining the position of the imaging device (228, 1028) based at least in part on a location of the fiducial marker (440, 1040A) in the captured image (536).

9. The method of claim 8, wherein the structure (112) is a track (112), and wherein the method comprises
providing a fiducial marker (440, 1040A) affixed to the track (112); wherein:
the position sensor (228, 1028) is an imaging device (228, 1028); and
aligning the position sensor (228, 1028) comprises capturing an image (536) of the fiducial marker (440, 1040A) using the imaging device (228, 1028) and determining the position of the imaging device (228, 1028) based at least in part on a location of the fiducial marker (440, 1040A) in the captured image (536), wherein sensing a position of the component (226, 1010, 1014) comprises capturing an image of the component (226, 1010, 1014) using the imaging device (228, 1028) and determining a position of the component (226, 1010, 1014) in the captured image (536).

10. A diagnostic laboratory system (100), for carrying out the method of claim 8 or 9 comprising:
a transport system (112);
an imaging device (228, 1028) aligned to the transport system (112), the imaging device (228, 1028) configured to generate image data representative of a component (226, 1010, 1014); and
a computer (114) configured to:
identify the component (226, 1010, 1014) in the image data;
determine the alignment of the component (226, 1010, 1014) relative to the imaging device (228, 1028); and
provide an indication of a misalignment of the component (226, 1010, 1014) relative to the transport system (112) based on the alignment of the component (226, 1010, 1014) relative to the imaging device (228, 1028).

11. The diagnostic laboratory system (100) of claim 10, comprising a fiducial marker (440, 1040A) coupled to the transport system (112), wherein the imaging device (228, 1028) is configured to generate image data representative of the fiducial marker (440, 1040A); wherein the computer (114) is configured to:
identify the fiducial marker (440, 1040A) in the image data; and
determine a position of the imaging device (228, 1028) based on the position of the fiducial marker (440, 1040A) in the image data.

## Patentansprüche

1. Verfahren zum Ausrichten einer Komponente (226, 1010, 1014) an eine Struktur (112) während der Montage und des Betriebs eines diagnostischen Laborsystems (100), umfassend:
Ausrichten eines Positionssensors (228, 1028, 1130) an der Struktur (112);
Erfassen einer Position der Komponente (226, 1010, 1014) unter Verwendung des Positionssensors (228, 1028, 1130);
Berechnen einer Position der Komponente (226, 1010, 1014) relativ zu dem Positionssensor (228, 1028, 1130) wenigstens zum Teil auf der Grundlage der Erfassung; und
Ausrichten der Komponente (226, 1010, 1014) an dem Positionssensor (228, 1028, 1130) wenigstens zum Teil auf der Grundlage der Erfassung,
wobei der Positionssensor (1130) ein Berührungssensor (1130) ist und wobei Erfassen einer Position der Komponente (1014) Berühren der Komponente (1014) mit dem Berührungssensor (1130) umfasst, oder
wobei der Positionssensor (1130) ein Berührungssensor (1130) ist und wobei die Komponente (1014) durch einen Roboter (1012) beweglich ist, und wobei Erfassen der Position der Komponente (1014) Bewegen des Roboters (1012) zu dem Ort, an dem die Komponente (1014) den Berührungssensor (1130) berührt, umfasst.

2. Verfahren nach Anspruch 1, wobei Ausrichten des Positionssensors (228, 1028, 1130) Ausrichten des Positionssensors (228, 1028, 1130) an einem Beförderungssystem oder an einer Bahn (112) umfasst.

3. Verfahren nach Anspruch 1, wobei Ausrichten der Komponente (226) Sichern der Komponente (226) in einer festen Position nach Ausrichten der Komponente (226) an dem Positionssensor (228, 1130) umfasst.

4. Verfahren nach Anspruch 1, wobei Ausrichten des Positionssensors (228) an der Struktur (112) Befestigen des Positionssensors (228) an der Struktur (112) umfasst.

5. Verfahren nach Anspruch 1, wobei die Komponente wenigstens ein Teil eines Gehäuses (652) ist, das dafür gestaltet ist, ein Modul (120) des diagnostischen Laborsystems (100) wenigstens teilweise zu umschließen.

6. Verfahren nach Anspruch 1, wobei die Komponente (226, 1010, 1014) eine Bezugsmarkierung (1040B, 1040B') umfasst oder wobei das Verfahren das Befestigen einer Bezugsmarkierung (1040B, 1040B') an der Komponente (226, 1010, 1014) umfasst, wobei:
Erfassen einer Position der Komponente (226, 1010, 1014) Erfassen einer Position der Bezugsmarkierung (1040B, 1040B') unter Verwendung des Positionssensors (228, 1028, 1130) umfasst; Berechnen der Position der Komponente (226, 1010, 1014) Berechnen der Position der Bezugsmarkierung (1040B, 1040B') relativ zu dem Positionssensor (228, 1028, 1130) wenigstens teilweise auf der Grundlage der Erfassung umfasst; und
Ausrichten der Komponente (226, 1010, 1014) an dem Positionssensor (228, 1028, 1130) Ausrichten der Bezugsmarkierung (1040B, 1040B') an dem Positionssensor (228, 1028, 1130) wenigstens teilweise auf der Grundlage der Erfassung umfasst.

7. Verfahren nach Anspruch 1, umfassend Bereitstellen einer Sicherungsvorrichtung (972), die an die Struktur (112) gekoppelt ist, wobei Ausrichten des Positionssensors (228, 1028, 1130) an der Struktur (112) Sichern des Positionssensors (228, 1028, 1130) an der Sicherungsvorrichtung (972) umfasst.

8. Verfahren zum Ausrichten einer Komponente (226, 1010, 1014) an eine Struktur (112) während der Montage und des Betriebs eines diagnostischen Laborsystems (100), umfassend:
Ausrichten eines Positionssensors (228, 1028, 1130) an der Struktur (112);
Erfassen einer Position der Komponente (226, 1010, 1014) unter Verwendung des Positionssensors (228, 1028, 1130);
Berechnen einer Position der Komponente (226, 1010, 1014) relativ zu dem Positionssensor (228, 1028, 1130) wenigstens zum Teil auf der Grundlage der Erfassung; und
Ausrichten der Komponente (226, 1010, 1014) an dem Positionssensor (228, 1028, 1130) wenigstens zum Teil auf der Grundlage der Erfassung,
ferner umfassend Bereitstellen einer Bezugsmarkierung (440, 1040A), die an der Struktur (112) befestigt ist; wobei:
der Positionssensor (228, 1028) eine Bildgebungsvorrichtung (228, 1028) ist; und
Ausrichten des Positionssensors (228, 1028) Erfassen eines Bildes (536) der Bezugsmarkierung (440, 1040A) unter Verwendung der Bildgebungsvorrichtung (228, 1028) und Bestimmen der Position der Bildgebungsvorrichtung (228, 1028) wenigstens teilweise auf der Grundlage einer Position der Bezugsmarkierung (440, 1040A) in dem aufgenommenen Bild (536) umfasst.

9. Verfahren nach Anspruch 8, wobei die Struktur (112) eine Bahn (112) ist und wobei das Verfahren umfasst
Bereitstellen einer Bezugsmarkierung (440, 1040A), die an der Bahn (112) befestigt ist; wobei:
der Positionssensor (228, 1028) eine Bildgebungsvorrichtung (228, 1028) ist; und
Ausrichten des Positionssensors (228, 1028) Aufnehmen eines Bildes (536) der Bezugsmarkierung (440, 1040A) unter Verwendung der Bildgebungsvorrichtung (228, 1028) und Bestimmen der Position der Bildgebungsvorrichtung (228, 1028) wenigstens teilweise auf der Grundlage einer Position der Bezugsmarkierung (440, 1040A) in dem aufgenommenen Bild (536) umfasst, wobei Erfassen einer Position der Komponente (226, 1010, 1014) Aufnehmen eines Bildes der Komponente (226, 1010, 1014) unter Verwendung der Bildgebungsvorrichtung (228, 1028) und Bestimmen einer Position der Komponente (226, 1010, 1014) in dem aufgenommenen Bild (536) umfasst.

10. Diagnostisches Laborsystem (100) zur Durchführung des Verfahrens nach Anspruch 8 oder 9, umfassend:
ein Beförderungssystem (112);
eine Bildgebungsvorrichtung (228, 1028), die an dem Beförderungssystem (112) ausgerichtet ist, wobei die Bildgebungsvorrichtung (228, 1028) dafür gestaltet ist, Bilddaten zu erzeugen, die eine Komponente (226, 1010, 1014) darstellen; und
einen Computer (114), gestaltet zum:
Identifizieren der Komponente (226, 1010, 1014) in den Bilddaten;
Bestimmen der Ausrichtung der Komponente (226, 1010, 1014) relativ zu der Bildgebungsvorrichtung (228, 1028); und
Bereitstellen einer Anzeige einer Fehlausrichtung der Komponente (226, 1010, 1014) relativ zu dem Beförderungssystem (112) auf der Grundlage der Ausrichtung der Komponente (226, 1010, 1014) relativ zu der Bildgebungsvorrichtung (228, 1028).

11. Diagnostisches Laborsystem (100) nach Anspruch 10, umfassend eine Bezugsmarkierung (440, 1040A), die an das Beförderungssystem (112) gekoppelt ist, wobei die Bildgebungsvorrichtung (228, 1028) dafür gestaltet ist, Bilddaten zu erzeugen, die die Bezugsmarkierung (440, 1040A) darstellen; wobei der Computer (114) gestaltet ist zum:
Identifizieren der Bezugsmarkierung (440, 1040A) in den Bilddaten; und
Bestimmen einer Position der Bildgebungsvorrichtung (228, 1028) auf der Grundlage der Position der Bezugsmarkierung (440, 1040A) in den Bilddaten.

## Revendications

1. Procédé d'alignement d'un composant (226, 1010, 1014) sur une structure (112) lors de l'assemblage et du fonctionnement d'un système de diagnostic de laboratoire (100), comprenant :
l'alignement d'un capteur de position (228, 1028, 1130) sur la structure (112) ;
la détection d'une position du composant (226, 1010, 1014) à l'aide du capteur de position (228, 1028, 1130) ;
le calcul d'une position du composant (226, 1010, 1014) par rapport au capteur de position (228, 1028, 1130) sur la base au moins en partie de la détection ; et
l'alignement du composant (226, 1010, 1014) sur le capteur de position (228, 1028, 1130) sur la base au moins en partie de la détection,
dans lequel le capteur de position (1130) est un capteur tactile (1130) et dans lequel la détection d'une position du composant (1014) comprend la mise en contact du composant (1014) avec le capteur tactile (1130), ou
dans lequel le capteur de position (1130) est un capteur tactile (1130) et dans lequel le composant (1014) peut être déplacé par un robot (1012), et dans lequel la détection de la position du composant (1014) comprend le déplacement du robot (1012) jusqu'à l'endroit où le composant (1014) touche le capteur tactile (1130).

2. Procédé selon la revendication 1, dans lequel l'alignement du capteur de position (228, 1028, 1130) comprend l'alignement du capteur de position (228, 1028, 1130) sur un système de transport ou sur une piste (112).

3. Procédé selon la revendication 1, dans lequel l'alignement du composant (226) comprend la fixation du composant (226) dans un emplacement fixe après l'alignement du composant (226) sur le capteur de position (228, 1130).

4. Procédé selon la revendication 1, dans lequel l'alignement du capteur de position (228) sur la structure (112) comprend la fixation du capteur de position (228) sur la structure (112).

5. Procédé selon la revendication 1, dans lequel le composant est au moins une partie d'un logement (652) configuré pour enfermer au moins partiellement un module (120) du système de diagnostic de laboratoire (100).

6. Procédé selon la revendication 1, dans lequel le composant (226, 1010, 1014) comprend un marqueur fiduciaire (1040B, 1040B'), ou dans lequel le procédé comprend la fixation d'un marqueur fiduciaire (1040B, 1040B') au composant (226, 1010, 1014), dans lequel :
la détection d'une position du composant (226, 1010, 1014) comprend la détection d'une position du marqueur fiduciaire (1040B, 1040B') à l'aide du capteur de position (228, 1028, 1130) ;
le calcul de la position du composant (226, 1010, 1014) comprend le calcul de la position du repère fiduciaire (1040B, 1040B') par rapport au capteur de position (228, 1028, 1130) sur la base au moins en partie de la détection ; et
l'alignement du composant (226, 1010, 1014) sur le capteur de position (228, 1028, 1130) comprend l'alignement du marqueur fiduciaire (1040B, 1040B') sur le capteur de position (228, 1028, 1130) sur la base au moins en partie de la détection.

7. Procédé selon la revendication 1, comprenant la fourniture d'un dispositif de fixation (972) accouplé à la structure (112), dans lequel l'alignement du capteur de position (228, 1028, 1130) sur la structure (112) comprend la fixation du capteur de position (228, 1028, 1130) sur le dispositif de fixation (972).

8. Procédé d'alignement d'un composant (226, 1010, 1014) sur une structure (112) lors de l'assemblage et du fonctionnement d'un système de diagnostic de laboratoire (100), comprenant :
l'alignement d'un capteur de position (228, 1028, 1130) sur la structure (112) ;
la détection d'une position du composant (226, 1010, 1014) à l'aide du capteur de position (228, 1028, 1130) ;
le calcul d'une position du composant (226, 1010, 1014) par rapport au capteur de position (228, 1028, 1130) sur la base au moins en partie de la détection ; et
l'alignement du composant (226, 1010, 1014) sur le capteur de position (228, 1028, 1130) sur la base au moins en partie de la détection,
comprenant en outre la fourniture d'un marqueur fiduciaire (440, 1040A) fixé à la structure (112) ; dans lequel :
le capteur de position (228, 1028) est un dispositif d'imagerie (228, 1028) ; et
l'alignement du capteur de position (228, 1028) comprend la capture d'une image (536) du marqueur fiduciaire (440, 1040A) à l'aide du dispositif d'imagerie (228, 1028) et la détermination de la position du dispositif d'imagerie (228, 1028) sur la base au moins en partie d'un emplacement du marqueur fiduciaire (440, 1040A) dans l'image capturée (536).

9. Procédé selon la revendication 8, dans lequel la structure (112) est une piste (112), et dans lequel le procédé comprend
la fourniture d'un marqueur fiduciaire (440, 1040A) fixé à la piste (112) ; dans lequel :
le capteur de position (228, 1028) est un dispositif d'imagerie (228, 1028) ; et
l'alignement du capteur de position (228, 1028) comprend la capture d'une image (536) du marqueur fiduciaire (440, 1040A) à l'aide du dispositif d'imagerie (228, 1028) et la détermination de la position du dispositif d'imagerie (228, 1028) sur la base au moins en partie d'un emplacement du marqueur fiduciaire (440, 1040A) dans l'image capturée (536), dans lequel la détection d'une position du composant (226, 1010,1014) comprend la capture d'une image du composant (226, 1010, 1014) à l'aide du dispositif d'imagerie (228, 1028) et la détermination d'une position du composant (226, 1010, 1014) dans l'image capturée (536).

10. Système de diagnostic de laboratoire (100), pour la mise en œuvre du procédé selon la revendication 8 ou 9 comprenant :
un système de transport (112) ;
un dispositif d'imagerie (228, 1028) aligné sur le système de transport (112), le dispositif d'imagerie (228, 1028) étant configuré pour générer des données d'image représentatives d'un composant (226, 1010, 1014) ; et
un ordinateur (114) configuré pour :
identifier le composant (226, 1010, 1014) dans les données d' image ;
déterminer l'alignement du composant (226, 1010, 1014) par rapport au dispositif d'imagerie (228, 1028) ; et
fournir une indication d'un défaut d'alignement du composant (226, 1010, 1014) par rapport au système de transport (112) sur la base de l'alignement du composant (226, 1010, 1014) par rapport au dispositif d'imagerie (228, 1028).

11. Système de diagnostic de laboratoire (100) selon la revendication 10, comprenant un marqueur fiduciaire (440, 1040A) couplé au système de transport (112), dans lequel le dispositif d'imagerie (228, 1028) est configuré pour générer des données d'image représentatives du marqueur fiduciaire (440, 1040A) ; dans lequel l'ordinateur (114) est configuré pour :
identifier le marqueur fiduciaire (440, 1040A) dans les données d'image ; et
déterminer une position du dispositif d'imagerie (228, 1028) sur la base de la position du marqueur fiduciaire (440, 1040A) dans les données d'image.
